# EUROPÄISCHE PATENTSCHRIFT

(11) **EP 3 050 336 B1**
(45) Veröffentlichungstag und Bekanntmachung des Hinweises auf die Patenterteilung: **07.08.2019**
(21) Anmeldenummer: 14759170.5
(22) Anmeldetag: 04.09.2014
(51) Int. Cl.: H04W 12/04, H04W 12/08, H04W 4/80, H04L 29/06, H04W 84/12, D06F 39/00, A47L 15/00, H04L 12/28

(54) **VERFAHREN ZUM ANBINDEN EINES HAUSHALTSGERÄTS AN EIN DRAHTLOSES HEIMNETZWERK, COMPUTERPROGRAMMPRODUKT, TRAGBARES KOMMUNIKATIONSENDGERÄT UND HAUSHALTSGERÄT**
METHOD FOR CONNECTING A DOMESTIC APPLIANCE TO A WIRELESS HOME NETWORK, COMPUTER PROGRAM PRODUCT, PORTABLE COMMUNICATIONS TERMINAL AND DOMESTIC APPLIANCE
PROCÉDÉ POUR RACCORDER UN APPAREIL ÉLECTROMÉNAGER À UN RÉSEAU DOMESTIQUE SANS FIL, PRODUIT PROGRAMME D'ORDINATEUR, TERMINAL DE COMMUNICATION PORTABLE ET APPAREIL ÉLECTROMÉNAGER

(30) Priorität: 23.09.2013 DE 102013219054
(43) Veröffentlichungstag der Anmeldung: 03.08.2016
(73) Patentinhaber: BSH Hausgeräte GmbH, 81739 München (DE)
(72) Erfinder: BÖLDT, Frank, 14656 Brieselang (DE); STARKE, Susett, 10367 Berlin (DE)
(86) Internationale Anmeldenummer: PCT/EP2014/068778
(87) Internationale Veröffentlichungsnummer: WO 2015/039874

(56) Entgegenhaltungen:
- US-A1- 2006 251 256
- US-A1- 2007 255 945
- US-A1- 2008 222 711
- US-A1- 2013 173 811

## Beschreibung

Die Erfindung betrifft ein Verfahren zum Anbinden bzw. zum Registrieren eines Haushaltsgeräts an ein drahtloses Heimnetzwerk, insbesondere ein WLAN-Netzwerk. Die Erfindung betrifft außerdem ein Computerprogrammprodukt, ein tragbares Kommunikationsendgerät zum Durchführen eines solchen Verfahrens sowie ein Haushaltsgerät.

Es ist bereits Stand der Technik, ein Haushaltsgerät an ein drahtloses lokales Netzwerk, insbesondere ein WLAN-Netzwerk, kommunikationstechnisch anzukoppeln. Über ein derartiges Netzwerk kann das Haushaltsgerät beispielsweise mit anderen Geräten kommunizieren, die ebenfalls an das Netzwerk angeschlossen sind. Andererseits ist auch eine Kommunikation zwischen dem Haushaltsgerät und einem Internetserver möglich, welche über einen Zugangspunkt (access point) bzw. über einen WLAN-Router durchgeführt werden kann. Beispielsweise können im Rahmen dieser Kommunikation Zustandsdaten von dem Haushaltsgerät an den Internetserver übermittelt werden, welche dann von dem Internetserver an ein internetfähiges Kommunikationsendgerät übermittelt werden können. Beispielsweise kann der Benutzer des Haushaltsgeräts mit seinem Smartphone auf die Zustandsdaten zugreifen, welche auf dem Internetserver abgelegt sind. Bei den Zustandsdaten kann es sich beispielsweise um Informationen bezüglich eines Betriebsprozesses des Haushaltsgeräts handeln, wie insbesondere über eine zum Abschließen des Betriebsprozesses benötigte Restzeit oder Informationen darüber, dass der Betriebsprozess - beispielsweise ein Waschgang - bereits abgeschlossen wurde. Es kann im Rahmen dieser Kommunikation gegebenenfalls auch eine Bedienung des Haushaltsgeräts unter Verwendung des tragbaren Kommunikationsendgeräts - beispielsweise des genannten Smartphones - ermöglicht werden.

Zum Stand der Technik gehört außerdem die Bereitstellung einer drahtlosen Kommunikationsverbindung direkt zwischen dem Haushaltsgerät und einem tragbaren Kommunikationsgerät unter Umgehung des Heimnetzwerks. Diese direkte Kommunikation kann beispielsweise über eine NFC-Verbindung (Near Field Communication) erfolgen. Auch hier können einerseits Zustandsdaten des Haushaltsgeräts an das tragbare Kommunikationsendgerät übermittelt werden; andererseits können auch Steuerbefehle von dem tragbaren Kommunikationsendgerät an das Haushaltsgerät übertragen werden. Ein solches Verfahren zur Steuerung eines Fernsehgeräts oder einer Klimaanlage ist beispielsweise aus dem Dokument US 2012/0236820 A1 bekannt. Hier wird zunächst eine Kommunikationsverbindung zwischen einem Mobiltelefon und dem Fernsehgerät unter Verwendung des NFC-Kommunikationsstandards hergestellt. Nach Herstellung dieser Kommunikationsverbindung erfolgt dann eine weitere Kommunikation über ein sekundäres Netzwerk, wie beispielsweise ein WLAN-Netzwerk.

Ein Verfahren zum Durchführen einer Unterstützungssitzung mit Hilfe eines tragbaren Kommunikationsendgeräts ist aus dem Dokument WO 2012/094520 A2 bekannt.

Ein Anbindungsprozess eines Haushaltsgeräts an ein WLAN-Netzwerk ist beispielsweise in dem Dokument WO 2013/015656 A1 beschrieben.

Aus der US 2013/0173811 A1 ist ein Netzwerk aus Hausgeräten bekannt, das einen Terminal umfasst, der Authentifizierungsinformationen überträgt. Die US 2006/0251256 A1 beschreibt ein Verfahren zum Steuern des Zugangs zu einem drahtlosen Netzwerk mittels eines Endgeräts, bei dem Authentifizierung und Autorisierung zum Einsatz kommt. Die US 2008/0222711 A1 beschäftigt sich mit einer Sicherheitsarchitektur, die mittels zweier Kommunikationskanäle funktioniert. Die US 2007/0255945 A1 thematisiert, wie ein Gerät zu einem sicheren Netzwerk hinzugefügt werden kann.

Haushaltsgeräte verfügen nur über eingeschränkte Eingabemöglichkeiten. Soll ein Haushaltsgerät an ein drahtloses Heimnetzwerk angebunden werden, so sollen in dem Haushaltsgerät auch Zugangsdaten zu dem Heimnetzwerk bekannt sein, welche bei der Registrierung des Haushaltsgeräts in dem drahtlosen Netzwerk genutzt werden sollen. Die Eingabe dieser Zugangsdaten in das Haushaltsgerät ist mit den vorhandenen Eingabemitteln nur beschränkt oder überhaupt nicht möglich. Außerdem können an einem bestimmten Ort üblicherweise Signale unterschiedlicher Netzwerke empfangen werden. Das Haushaltsgerät muss also speziell in einem konkreten Netzwerk registriert werden, und die Verbindung zu einem anderen Netzwerk soll verhindert werden. Auch die Auswahl des korrekten Netzwerks stellt bei einem Haushaltsgerät eine Herausforderung dar, insbesondere wenn das Haushaltsgerät über kein speziell eingerichtetes Display verfügt und die Auswahl somit nicht in üblicher Weise erfolgen kann.

Es ist Aufgabe der Erfindung, das Anbinden eines Haushaltsgeräts an ein drahtloses Heimnetzwerk ohne viel Aufwand zu ermöglichen.

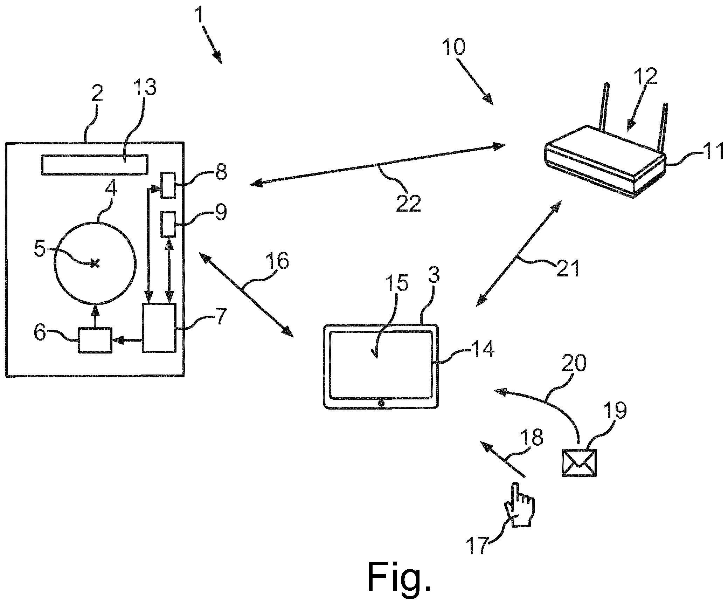

Diese Aufgabe wird erfindungsgemäß durch ein Verfahren, durch ein Computerprogrammprodukt, durch ein tragbares Kommunikationsendgerät sowie durch ein Haushaltsgerät mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figur.

Ein erfindungsgemäßes Verfahren dient zum Anbinden eines Haushaltsgeräts an ein drahtloses Heimnetzwerk mit Hilfe eines tragbaren Kommunikationsendgeräts, wie beispielsweise eines Smartphones oder eines Tablet-PCs. Es werden Zugangsdaten des Heimnetzwerks durch das tragbare Kommunikationsendgerät empfangen. Es wird eine von dem Heimnetzwerk separate und somit von dem Heimnetzwerk unabhängige drahtlose Kommunikationsverbindung zwischen dem Haushaltsgerät einerseits und dem tragbaren Kommunikationsendgerät andererseits gemäß einem vorbestimmten Nahdistanz-Kommunikationsstandard aufgebaut. Dieser Nahdistanz-Kommunikationsstandard ist ein von dem Standard des Heimnetzwerks unterschiedlicher Kommunikationsstandard. Das tragbare Kommunikationsendgerät übermittelt dann Steuerbefehle über die Kommunikationsverbindung an das Haushaltsgerät, wobei durch diese Steuerbefehle das Haushaltsgerät zum Anbinden an das drahtlose Heimnetzwerk unter Verwendung der Zugangsdaten angesteuert wird.

Das erfindungsgemäße Verfahren hat insbesondere den Vorteil, dass die Registrierung des Haushaltsgeräts in dem drahtlosen Heimnetzwerk ohne viel Aufwand vorgenommen werden kann. Der Registrierungsprozess muss nicht direkt am Haushaltsgerät durchgeführt werden, so dass die technischen Einschränkungen verbunden mit der Bedienblende und dem Fehlen von Eingabemitteln und Anzeigeeinrichtungen entfallen. Da für die direkte Datenkommunikation zwischen dem Haushaltsgerät und dem tragbaren Kommunikationsendgerät ein Nahdistanz-Kommunikationsstandard verwendet wird, wird somit auch ein Zugriff auf die Daten durch unbefugte Dritte verhindert. Diese Kommunikationsverbindung kann nämlich lediglich dann aufgebaut werden, wenn sich das tragbare Kommunikationsendgerät in unmittelbarer Nähe des Haushaltsgeräts befindet. Wird beispielsweise die NFC verwendet, so werden gemäß diesem Kommunikationsstandard Datenpakete verschlüsselt ausgetauscht, so dass sich eine weitere Authentifizierung mit den damit verbundenen Nachteilen erübrigt. Für den Authentifizierungsprozess benötigt der Benutzer außerdem nur ein sehr geringes technisches Verständnis, um das Haushaltsgerät mit dem drahtlosen Heimnetzwerk zu verbinden. Außerdem sind keine oder nur wenige Benutzerinteraktionen bzw. Bedieneingaben an dem mobilen Kommunikationsendgerät selbst notwendig.

Erfindungsgemäß ist also vorgesehen, dass auf dem tragbaren Kommunikationsendgerät die netzwerkseitigen Zugangsdaten verfügbar gemacht werden, die zur Anbindung des Haushaltsgeräts nötig sind, und eine Kommunikationsverbindung zwischen dem Haushaltsgerät und dem tragbaren Kommunikationsendgerät mittels einer Nahdistanz-Kommunikationstechnologie hergestellt wird, über welche das Haushaltsgerät durch das tragbare Kommunikationsendgerät dazu getriggert wird, dass sich das Haushaltsgerät direkt mit dem drahtlosen Heimnetzwerk unter Verwendung der übermittelten Zugangsdaten verbindet.

Unter einem tragbaren Kommunikationsendgerät wird vorliegend ein mobiles Endgerät verstanden, welches zur drahtlosen Kommunikation gemäß einem vorbestimmten Kommunikationsstandard ausgebildet ist und auf welchem neue Anwendungen bzw. Applikationen (Computerprogramme) installiert und dann ausgeführt werden können. Das tragbare Kommunikationsendgerät kann beispielsweise ein Mobiltelefon (Smartphone), ein Tablet-PC oder ein vergleichbares mobiles Endgerät sein, wie zum Beispiel ein MP3-Player mit einer entsprechenden Kommunikationseinrichtung. Die Erfindung macht sich dabei die Tatsache zu Nutze, dass heutzutage nahezu jeder über ein intelligentes Mobiltelefon mit einem Display verfügt, so dass sich der Einsatz von zusätzlichen Kommunikationsgeräten erübrigt.

Unter einem Haushaltsgerät wird vorliegend insbesondere ein Gerät verstanden, welches zur Haushaltsführung eingesetzt wird. Dies kann insbesondere ein Haushaltsgroßgerät sein, wie beispielsweise ein Gerät zur Pflege von Wäschestücken, ein Gargerät, ein Kältegerät, eine Kühl-Gefrierkombination, ein Klimagerät oder eine Geschirrspülmaschine. Ein Gerät zur Pflege von Wäschestücken kann dabei eine Waschmaschine, ein Wäschetrockner oder ein Waschtrockner sein. Das Haushaltsgerät kann aber auch ein Haushaltskleingerät sein, wie beispielsweise ein Kaffeevollautomat oder eine Küchenmaschine.

Unter einem Nahdistanz-Kommunikationsstandard wird hier insbesondere ein Standard für eine drahtlose Kommunikation verstanden, welcher eine Reichweite von maximal einem Meter ermöglicht. Diese Ausführungsform hat den Vorteil hinsichtlich der Sicherheit, da - wie bereits ausgeführt - ein Zugriff auf die Daten durch unbefugte Dritte verhindert werden kann.

Besonders bevorzugt wird die Kommunikationsverbindung unter Verwendung des NFC-Kommunikationsstandards aufgebaut. Dazu können das Haushaltsgerät und das tragbare Kommunikationsendgerät über jeweilige Kommunikationseinrichtungen verfügen, welche zur Datenkommunikation nach dem NFC-Standard ausgebildet sind. Durch die geringe Reichweite der NFC können hier Interferenzen mit anderen Geräten verhindert werden, und es können auch Zugriffe auf die Daten durch unbefugte Dritte ausgeschlossen werden. Die Reichweite der NFC ist nämlich derart gering, dass sich der Benutzer in unmittelbarer Nähe des Haushaltsgeräts befinden muss, damit die Kommunikationsverbindung überhaupt aufgebaut werden kann. Außerdem erfolgt eine Kommunikation gemäß dem NFC-Standard verschlüsselt, so dass sich hier eine weitere Authentifizierung des Haushaltsgeräts mit dem tragbaren Kommunikationsendgerät mit den damit verbundenen Nachteilen erübrigt.

Alternativ zum NFC-Kommunikationsstandard kann auch der Bluetooth-Standard oder ein Standard für optische Datenkommunikation verwendet werden.

Demgegenüber ist das drahtlose Heimnetzwerk vorzugsweise ein WLAN-Netzwerk. Das Haushaltsgerät wird also an ein WLAN-Netzwerk als Heimnetzwerk angebunden. In dieser Ausführungsform können die Zugangsdaten die SSID (Service Set Identifier) eines Zugangspunkts des WLAN-Netzwerks, und insbesondere auch einen WPA-Schlüssel (WiFi Protected Acces), umfassen. Diese Daten ermöglichen es dem Haushaltsgerät, sich in dem WLAN-Netzwerk zu registrieren und sich an das WLAN-Netzwerk kommunikationstechnisch anzubinden.

Die an das Haushaltsgerät übermittelten Zugangsdaten können optional auch die Bezeichnung des Heimnetzwerks beinhalten, mit welchem sich das Haushaltsgerät verbinden soll.

Wie bereits ausgeführt, werden die Zugangsdaten durch das tragbare Kommunikationsendgerät empfangen. Dieses Empfangen der Zugangsdaten kann unterschiedlichste Ausführungsformen umfassen: Zum einen können die Zugangsdaten über eine Eingabeeinrichtung des tragbaren Kommunikationsendgeräts durch eine Bedienperson eingegeben werden. Hier gibt also die Bedienperson selbst die Zugangsdaten an dem tragbaren Kommunikationsendgerät ein, beispielsweise mit Hilfe einer virtuellen Tastatur über ein Touchscreen. Ergänzend oder alternativ kann jedoch auch vorgesehen sein, dass durch das tragbare Kommunikationsendgerät eine Nachricht, beispielsweise eine SMS (Short Message Service) und/oder eine E-Mail, mit den Zugangsdaten empfangen wird. Weiterhin ergänzend oder alternativ ist es auch möglich, dass die Zugangsdaten von einem Zugangspunkt des drahtlosen Heimnetzwerks an das tragbare Kommunikationsendgerät übertragen werden. In jedem Fall erfolgt die Übermittlung der Zugangsdaten an das tragbare Kommunikationsendgerät besonders benutzerfreundlich.

Erfindungsgemäß wird über die Kommunikationsverbindung von dem Haushaltsgerät an das tragbare Kommunikationsendgerät ein Identifikator des Haushaltsgeräts für das drahtlose Heimnetzwerk übertragen. Dieser Identifikator wird also durch das tragbare Kommunikationsendgerät empfangen, so dass das tragbare Kommunikationsendgerät den Identifikator des Haushaltsgeräts kennt. Bei dem Identifikator kann es sich beispielsweise um eine MAC-Adresse (Media-Access-Control) handeln, welche eine individuelle und spezifische Bezeichnung des Haushaltsgeräts in dem drahtlosen Heimnetzwerk darstellt. Die Übermittlung des Identifikators von dem Haushaltsgerät an das tragbare Kommunikationsendgerät hat den Vorteil, dass sich das tragbare Kommunikationsendgerät mit diesem Identifikator des Haushaltsgeräts bei dem drahtlosen Heimnetzwerk selbst anmelden und sich somit in dem Heimnetzwerk als das Haushaltsgerät ausgeben kann. Auf diese Art und Weise kann das Haushaltsgerät in dem Heimnetzwerk bereits durch das tragbare Kommunikationsendgerät angemeldet bzw. registriert werden. Es kann durch das tragbare Kommunikationsendgerät auch überprüft werden, ob die Anbindung des Haushaltsgeräts an das Heimnetzwerk überhaupt voraussichtlich funktionieren wird.

Es wird also vor dem Ansteuern des Haushaltsgeräts zum Anbinden an das drahtlose Heimnetzwerk eine Datenverbindung durch das tragbare Kommunikationsendgerät zu dem drahtlosen Heimnetzwerk unter Verwendung des empfangenen Identifikators des Haushaltsgeräts aufgebaut und dann bevorzugt wieder getrennt. Das tragbare Kommunikationsendgerät kann das Haushaltsgerät also bereits im Voraus in dem Heimnetzwerk registrieren und somit auch überprüfen, ob das Anbinden des Haushaltsgeräts an das Heimnetzwerk überhaupt möglich ist. Gegebenenfalls können hier Fehlermeldungen ausgegeben werden.

Das Ansteuern des Haushaltsgeräts zum Anbinden an das drahtlose Netzwerk erfolgt vorzugsweise erst nach dem erfolgreichen Aufbau der genannten Datenverbindung zwischen dem tragbaren Kommunikationsendgerät und dem Heimnetzwerk unter Verwendung des Identifikators des Haushaltsgeräts. Das Ansteuern des Haushaltsgeräts zum Anbinden an das drahtlose Heimnetzwerk erfolgt insbesondere auch erst nach dem erfolgreichen Trennen dieser Datenverbindung. Somit kann sichergestellt werden, dass sich das Haushaltsgerät dann selbst an das Heimnetzwerk ankoppeln kann. Es erfolgt also quasi eine Übergabe der Datenverbindung von dem tragbaren Kommunikationsendgerät an das Haushaltsgerät.

Das Registrieren des Haushaltsgeräts in dem drahtlosen Heimnetzwerk kann also durch das tragbare Kommunikationsendgerät vorgenommen werden. Der Identifikator des Haushaltsgeräts ist dann in dem Heimnetzwerk bereits bekannt. Eine solche Vorgehensweise hat den Vorteil, dass sich die Person unter Verwendung des tragbaren Kommunikationsendgeräts ohne viel Aufwand - beispielsweise mittels eines Touchscreens - das richtige Heimnetzwerk auswählen kann, mit welchem die Datenverbindung aufgebaut werden soll. Dies beruht auf der Problematik, dass an einem bestimmten Ort üblicherweise mehrere Heimnetzwerke vorhanden sind und das Gerät somit üblicherweise Signale mehrerer Heimnetzwerke empfangen kann. Mit Hilfe einer herkömmlichen Bedienblende eines Haushaltsgeräts ist es nicht möglich, das richtige Heimnetzwerk auszuwählen. Verbindet sich das tragbare Kommunikationsendgerät erfolgreich mit dem Heimnetzwerk unter Verwendung des Identifikators des Haushaltsgeräts, so kann dann diese Verbindung an das Haushaltsgerät selbst übergeben werden.

Das erfolgreiche Anbinden des Haushaltsgeräts an das drahtlose Heimnetzwerk kann auch durch das tragbare Kommunikationsendgerät erfasst und dann mittels einer Ausgabeeinrichtung - beispielsweise des genannten Touchscreens - des tragbaren Kommunikationsendgeräts signalisiert werden. Somit wird die Bedienperson über den erfolgreichen Authentifizierungsprozess informiert. Dies kann beispielsweise so aussehen, dass nach dem erfolgreichen Anbinden an das drahtlose Heimnetzwerk das Haushaltsgerät eine entsprechende Nachricht an das tragbare Kommunikationsendgerät sendet, welche Informationen über den erfolgreich abgeschlossenen Verbindungsprozess beinhaltet. Diese Nachricht kann beispielsweise über die Nahdistanz-Kommunikationsverbindung oder aber bereits über das drahtlose Heimnetzwerk übertragen werden.

Die Erfindung betrifft außerdem ein Computerprogrammprodukt mit einem Speichermedium, auf welchem ein Computerprogramm abgelegt ist, das dazu ausgelegt ist, beim Ausführen durch ein tragbares Kommunikationsendgerät ein erfindungsgemäßes Verfahren durchzuführen.

Ein erfindungsgemäßes tragbares Kommunikationsendgerät ist zum Durchführen eines erfindungsgemäßen Verfahrens ausgebildet.

Die Erfindung betrifft auch ein Haushaltsgerät mit einer ersten Kommunikationseinrichtung zum Anbinden des Haushaltsgeräts an ein drahtloses Heimnetzwerk, und mit einer zweiten Kommunikationseinrichtung zum Aufbauen einer von dem Heimnetzwerk separaten drahtlosen Kommunikationsverbindung zu einem tragbaren Kommunikationsendgerät gemäß einem vorbestimmten Nahdistanz-Kommunikationsstandard. Eine Steuereinrichtung des Haushaltsgeräts ist dazu ausgelegt, über die Kommunikationsverbindung der zweiten Kommunikationseinrichtung Steuerbefehle von dem tragbaren Kommunikationsendgerät zu empfangen und aufgrund der Steuerbefehle die erste Kommunikationseinrichtung zum Anbinden an das drahtlose Heimnetzwerk unter Verwendung von in den Steuerbefehlen enthaltenen Zugangsdaten des Heimnetzwerks anzusteuern.

Die mit Bezug auf das erfindungsgemäße Verfahren vorgestellten bevorzugten Ausführungsformen und deren Vorteile gelten entsprechend für das erfindungsgemäße Computerprogrammprodukt, für das erfindungsgemäße Kommunikationsendgerät sowie für das erfindungsgemäße Haushaltsgerät.

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügte Zeichnung näher erläutert. Dabei veranschaulicht die einzige Fig. in schematischer Darstellung ein System mit einem Haushaltsgerät und einem tragbaren Kommunikationsendgerät gemäß einer Ausführungsform der Erfindung.

Ein in der Fig. dargestelltes System 1 umfasst ein Haushaltsgerät 2 sowie ein tragbares Kommunikationsendgerät 3. Im Ausführungsbeispiel ist das Haushaltsgerät 2 als Waschmaschine ausgebildet, welche eine Wäschetrommel 4 umfasst, welche in dem Haushaltsgerät 2 um eine horizontal verlaufende Drehachse 5 drehbar gelagert ist. Die Wäschetrommel 4 wird durch einen Antriebsmotor 6 angetrieben, der mittels einer Steuereinrichtung 7 des Haushaltsgeräts 2 angesteuert wird. Das Haushaltsgerät 2 verfügt außerdem über eine erste und eine zweite Kommunikationseinrichtung 8, 9. Die erste Kommunikationseinrichtung 8 dient zur Kommunikation mit einem drahtlosen Heimnetzwerk 10, und genauer gesagt mit einem Zugangspunkt 11 des Heimnetzwerks 10, welcher im Ausführungsbeispiel in einen Router 12 integriert ist. Das Heimnetzwerk 10 ist ein WLAN-Netzwerk. Demgegenüber dient die zweite Kommunikationseinrichtung 9 des Haushaltsgeräts 2 zur direkten Kommunikation mit dem tragbaren Kommunikationsendgerät 3 gemäß einem Nahdistanz-Kommunikationsstandard, im Ausführungsbeispiel gemäß dem NFC-Kommunikationsstandard.

Das Haushaltsgerät 2 hat außerdem eine Bedienblende 13, welche zum Bedienen des Haushaltsgeräts 2 dient und in an sich bekannter Weise beispielsweise ein kleines Display und mehrere Bedienelemente aufweisen kann.

Das tragbare Kommunikationsendgerät 3 ist im Ausführungsbeispiel ein Tablet-PC. Alternativ kann jedoch auch ein Smartphone eingesetzt werden. Auch das tragbare Kommunikationsendgerät 3 ist zur Kommunikation mit dem Heimnetzwerk 10 und zusätzlich auch zur Kommunikation mit der zweiten Kommunikationseinrichtung 9 gemäß dem NFC-Standard ausgebildet. Zu diesem Zwecke beinhaltet das tragbare Kommunikationsendgerät 3 ebenfalls entsprechende Kommunikationseinrichtungen (nicht dargestellt). Das tragbare Kommunikationsendgerät 3 hat ein Display 14, welches sowohl als eine Eingabeeinrichtung als auch eine Ausgabeeinrichtung dient und in diesem Zusammenhang als Touchscreen ausgebildet ist. Das Display 14 weist also eine berührungssensitive Oberfläche 15 auf, über welche Bedieneingaben an dem tragbaren Kommunikationsendgerät 3 vorgenommen werden können.

Nun soll das Haushaltsgerät 2 an das drahtlose Heimnetzwerk kommunikationstechnisch angeschlossen und registriert werden. Ein Verfahren gemäß einer Ausführungsform der Erfindung wird nachfolgend näher erläutert:
Auf dem tragbaren Kommunikationsendgerät 3 installiert der Benutzer eine entsprechende Anwendung bzw. Applikation (Computerprogramm), welche den Benutzer dazu auffordert, das tragbare Kommunikationsendgerät 3 direkt vor das Haushaltsgerät 2 zu lokalisieren, um den Registrierungsprozess zu starten. Gelangt das tragbare Kommunikationsendgerät 3 in einen Reichweitenbereich der NFC-Kommunikation, so wird eine Kommunikationsverbindung 16 über die NFC aufgebaut. Über diese Kommunikationsverbindung 16 können nun von dem Haushaltsgerät 2 an das Kommunikationsendgerät 3 die für die Registrierung des Haushaltsgeräts 2 relevanten Daten übertragen werden. Diese Daten beinhalten insbesondere einen Identifikator (MAC-Adresse) des Haushaltsgeräts 2 bzw. der ersten Kommunikationseinrichtung 8. Da die NFC die übermittelten Datenpakete verschlüsselt austauscht, ist eine weitere Authentifizierung zwischen dem Kommunikationsendgerät 3 und dem Haushaltsgerät 2 nicht nötig. Dies kann automatisch erfolgen und kann dem Benutzer auf dem tragbaren Kommunikationsendgerät signalisiert werden.

In einem weiteren Schritt werden dem tragbaren Kommunikationsendgerät 3 auch die Zugangsdaten des Heimnetzwerks 10 zur Verfügung gestellt, die zur Anbindung des Haushaltsgeräts 2 nötig sind. Diese Zugangsdaten beinhalten im Ausführungsbeispiel die SSID des Zugangspunkts 11 und zusätzlich auch den WPA-Schlüssel. Diese Zugangsdaten können dem tragbaren Kommunikationsendgerät 3 auf verschiedene Art und Weise zur Verfügung gestellt werden. Beispielsweise kann hier eine Bedienperson 17 diese Zugangsdaten über eine entsprechende Bedieneingabe 18 an der berührungssensitiven Oberfläche 15 selbst eingeben. Es ist auch möglich, die Zugangsdaten dem Kommunikationsendgerät 3 auch über eine Nachricht 19 gemäß der Pfeildarstellung 20 mitzuteilen, insbesondere mit einer SMS und/oder einer E-Mail. Im tragbaren Kommunikationsendgerät 3 sind also die Zugangsdaten des Heimnetzwerks 10 abgelegt.

Die Bedienperson 17 kann nun an dem tragbaren Kommunikationsendgerät 3 das richtige Heimnetzwerk 10 auswählen. Das tragbare Kommunikationsendgerät 3 verbindet sich dann mit dem Zugangspunkt 11 unter Verwendung des Identifikators des Haushaltsgeräts 2 und gibt sich somit als die erste Kommunikationseinrichtung 8 des Haushaltsgeräts 2 aus. Für diese Registrierung ist es nicht notwendig, dass sich die Bedienperson 17 die ganze Zeit am Haushaltsgerät 2 aufhält. Dies ist lediglich für die Initiierung des Prozesses und die Übertragung der Daten über die Kommunikationsverbindung 16 notwendig.

Also wird in dem Heimnetzwerk 10 der Identifikator des Haushaltsgeräts 2 registriert. Das Kommunikationsendgerät 3 überprüft nun, ob diese Registrierung erfolgreich war bzw. ob eine Datenverbindung 21 zum Heimnetzwerk 10 unter Verwendung des Identifikators des Haushaltsgeräts 2 überhaupt möglich ist. Nach erfolgreichem Aufbau der Datenverbindung 21 kann diese wieder getrennt bzw. an das Haushaltsgerät 2 übergeben werden.

Das tragbare Kommunikationsendgerät 3 kann dann über die Kommunikationsverbindung 16 das Haushaltsgerät 2 triggern, so dass sich das Haushaltsgerät 2 direkt mit dem Heimnetzwerk 10 über eine Verbindung 22 verbindet. Dazu übermittelt das tragbare Kommunikationsendgerät 3 an das Haushaltsgerät 2 die erforderlichen Zugangsdaten des Heimnetzwerks 10.

Ob die Anbindung des Haushaltsgeräts 2 an das Heimnetzwerk 10 erfolgreich war oder gescheitert ist, wird über das Kommunikationsendgerät 3 signalisiert. Dies kann das Haushaltsgerät 2 dem Kommunikationsendgerät 3 über entsprechende Nachricht mitteilen.

### Bezugszeichenliste

- 1: System
- 2: Haushaltsgerät
- 3: tragbares Kommunikationsendgerät
- 4: Wäschetrommel
- 5: Drehachse
- 6: Antriebsmotor
- 7: Steuereinrichtung
- 8: erste Kommunikationseinrichtung
- 9: zweite Kommunikationseinrichtung
- 10: Heimnetzwerk
- 11: Zugangspunkt
- 12: Router
- 13: Bedienblende
- 14: Display
- 15: berührungssensitive Oberfläche
- 16: Kommunikationsverbindung
- 17: Bedienperson
- 18: Bedieneingabe
- 19: Nachricht
- 20: Pfeildarstellung
- 21: Datenverbindung
- 22: Verbindung

## Patentansprüche

1. Verfahren zum Anbinden eines Haushaltsgeräts (2) an ein drahtloses Heimnetzwerk (10), folgende Schritte umfassend:
- (a) Empfangen von Zugangsdaten des Heimnetzwerks (10) durch ein tragbares Kommunikationsendgerät (3),
- (b) Aufbauen einer von dem Heimnetzwerk (10) separaten drahtlosen Kommunikationsverbindung (16) zwischen dem Haushaltsgerät (2) einerseits und dem tragbaren Kommunikationsendgerät (3) andererseits gemäß einem vorbestimmten Nahdistanz-Kommunikationsstandard,
- (c) Übertragen eines Identifikators des Haushaltsgeräts (2) für das drahtlose Heimnetzwerk (10) über die Kommunikationsverbindung (16) von dem Haushaltsgerät (2) an das tragbare Kommunikationsendgerät (3);
- (d) Auswählen eines Heimnetzwerks (10), mit welchem eine Datenverbindung aufgebaut werden soll, unter Verwendung des tragbaren Kommunikationsendgeräts (3);
- (e) nach Schritt (c) und (d) Aufbau der Datenverbindung zwischen dem tragbaren Kommunikationsendgerät (3) und dem ausgewählten Heimnetzwerk (10) unter Verwendung des Identifikators des Haushaltsgeräts (2) und
- (f) nach Schritt (e) Übergabe der Datenverbindung vom tragbaren Kommunikationsendgerät (3) an das Haushaltsgerät (2) durch Übertragen von Steuerbefehlen von dem tragbaren Kommunikationsendgerät (3) über die Kommunikationsverbindung (16) an das Haushaltsgerät (2), wobei durch die Steuerbefehle das Haushaltsgerät (2) zum Anbinden an das drahtlose Heimnetzwerk (10) unter Verwendung der Zugangsdaten angesteuert wird.

2. Verfahren nach Anspruch 1, **dadurch gekennzeichnet, dass** die Kommunikationsverbindung (16) unter Verwendung des NFC-Kommunikationsstandards oder des Bluetooth-Kommunikationsstandards oder eines Kommunikationsstandards für optische Datenkommunikation aufgebaut wird.

3. Verfahren nach Anspruch 1 oder 2, **dadurch gekennzeichnet, dass** das Haushaltsgerät (2) an ein WLAN-Netzwerk als Heimnetzwerk (10) angebunden wird und die Zugangsdaten eine SSID eines Zugangspunkts (11) des WLAN-Netzwerks, und insbesondere auch einen WPA-Schlüssel, umfassen.

4. Verfahren nach einem der vorhergehenden Ansprüche, **dadurch gekennzeichnet, dass** das Empfangen der Zugangsdaten durch das tragbare Kommunikationsendgerät (3) umfasst, dass:
- die Zugangsdaten über eine Eingabeeinrichtung (14) des tragbaren Kommunikationsendgeräts (3) durch eine Bedienperson (17) eingegeben werden und/oder
- durch das tragbare Kommunikationsendgerät (3) eine Nachricht (19), insbesondere eine SMS und/oder eine E-Mail, mit den Zugangsdaten empfangen wird und/oder
- die Zugangsdaten von einem Zugangspunkt (11) des drahtlosen Heimnetzwerks (10) an das tragbare Kommunikationsendgerät (3) übertragen werden.

5. Verfahren nach einem der vorhergehenden Ansprüche, **dadurch gekennzeichnet, dass** das erfolgreiche Anbinden des Haushaltsgeräts (2) an das drahtlose Heimnetzwerk (10) durch das tragbare Kommunikationsendgerät (3) erfasst und mittels einer Ausgabeeinrichtung (14) des tragbaren Kommunikationsendgeräts (3) signalisiert wird.

6. Computerprogrammprodukt mit einem Speichermedium, auf welchem ein Computerprogramm abgelegt ist, das dazu ausgelegt ist, beim Ausführen durch ein tragbares Kommunikationsendgerät (3) ein Verfahren nach einem der vorhergehenden Ansprüche durchzuführen.

7. Tragbares Kommunikationsendgerät (3), welches dazu ausgelegt ist, ein Verfahren nach einem der Ansprüche 1 bis 5 durchzuführen.

8. Haushaltsgerät (2) mit:
- einer ersten Kommunikationseinrichtung (8) zum Anbinden des Haushaltsgeräts (2) an ein drahtloses Heimnetzwerk (10) und
- einer zweiten Kommunikationseinrichtung (9) zum Aufbauen einer von dem Heimnetzwerk (10) separaten drahtlosen Kommunikationsverbindung (16) zu einem tragbaren Kommunikationsendgerät (3) gemäß einem vorbestimmten Nahdistanz-Kommunikationsstandard, wobei das Haushaltsgerät (2) dafür eingerichtet ist, über die Kommunikationsverbindung (16) an das tragbare Kommunikationsendgerät (3) einen Identifikator des Haushaltsgeräts (2) für das drahtlose Heimnetzwerk (10) zu übertragen, und
- einer Steuereinrichtung (7), welche dazu ausgelegt ist, über die Kommunikationsverbindung (16) der zweiten Kommunikationseinrichtung (9) Steuerbefehle von dem tragbaren Kommunikationsendgerät (3) zu empfangen und aufgrund der Steuerbefehle die erste Kommunikationseinrichtung (8) zum Anbinden an ein ausgewähltes drahtloses Heimnetzwerk (10) unter Verwendung von in den Steuerbefehlen enthaltenen Zugangsdaten des ausgewählten Heimnetzwerks (10) anzusteuern, um von dem tragbaren Kommunikationsendgerät (3) eine unter Verwendung des Identifikators des Haushaltsgeräts (2) aufgebaute Datenverbindung mit dem unter Verwendung des tragbaren Kommunikationsendgeräts (3) ausgewählten Heimnetzwerk (10) zu empfangen.

## Claims

1. Method for connecting a household appliance (2) to a wireless home network (10), comprising the following steps:
- (a) Receipt of access data of the home network (10) by a portable communications terminal (3),
- (b) Setup of a wireless communication link (16) separate from the home network (10) between the household appliance (2) on the one side and the portable communications terminal (3) on the other side in accordance with a predetermined close-range communications standard,
- (c) Transmission of an identifier of the household appliance (2) for the wireless home network (10) from the household appliance (2) to the portable communications terminal (3) via the communication link (16);
- (d) Selection of a home network (10), with which a data connection is to be established. using the portable communications terminal (3);
- (e) Following step (c) and (d), establishing the data connection between the portable communications terminal (3) and the selected home network (10) using the identifier of the household appliance (2) and
- (f) Following step (e), a handover of the data connection from the portable communications terminal (3) to the household appliance (2) by transmitting control commands from the portable communications terminal (3) via the communication link (16) to the household appliance (2), wherein the household appliance (2) is controlled by the control commands to connect to the wireless home network (10) using the access data.

2. Method according to claim 1, **characterised in that** the communication link (16) is set up using the NFC communications standard or the Bluetooth communications standard or a communications standard for optical communication.

3. Method according to claim 1 or 2, **characterised in that** the household appliance (2) is connected to a WLAN network as home network (10) and the access data comprises an SSID of an access point (11) of the WLAN network, and especially also a WPA key.

4. Method according to one of the preceding claims, **characterised in that** the receipt of the access data by the portable communications terminal (3) includes:
- The access data being entered via an input device (14) of the portable communications terminal (3) by an operator (17) and/or
- A message (19), especially an SMS and/or an e-mail with the access data, being received by the portable communications terminal (3) and/or
- The access data being transmitted from an access point (11) of the wireless home network (10) to the portable communications terminal (3).

5. Method according to one of the preceding claims, **characterised in that** the successful connection of the household appliance (2) to the wireless home network (10) is detected by the portable communications terminal (3) and is signalled by means of an output device (14) of the portable communications terminal (3).

6. Computer program product with a storage medium, on which a computer program is stored, which is designed, when executed by a portable communications terminal (3), to carry out a method according to one of the preceding claims.

7. Portable communications terminal (3), which is designed to carry out a method according to one of claims 1 to 5.

8. Household appliance (2) with:
- A first communications device (8) for connecting the household appliance (2) to a wireless home network (10) and
- A second communications device (9) for setting up a wireless communication link (16) separate from the home network (10) to a portable communications terminal (3) in accordance with a predetermined close-range communications standard, wherein the household appliance (2) is embodied for transmitting an identifier of the household appliance (2) for the wireless home network (10) to the portable communications terminal (3) via the communication link (16), and
- a control device (7) which is designed to receive control commands from the portable communications terminal (3) via the communication link (16) of the second communications device (9) and, on the basis of the control commands, to control the first communication device (8) to connect to the wireless home network (10) using access data of the selected home network (10) contained in the control commands, in order to receive from the portable communications terminal (3) a data connection, established using the identifier of the household appliance (2), with the home network (10) selected using the portable communications terminal (3).

## Revendications

1. Procédé de connexion d'un appareil électroménager (2) à un réseau domestique sans fil (10), comprenant les étapes suivantes :
- (a) la réception de données d'accès du réseau domestique (10) par un terminal de communication portable (3),
- (b) l'établissement d'une liaison de communication sans fil (16) distincte du réseau domestique (10) entre l'appareil électroménager (2) d'une part et le terminal de communication portable (3) d'autre part selon un standard de communication de courte distance prédéterminé,
- (c) la transmission d'un identifiant de l'appareil électroménager (2) pour le réseau domestique sans fil (10) via la liaison de communication (16) depuis l'appareil électroménager (2) vers le terminal de communication portable (3) ;
- (d) la sélection d'un réseau domestique (10) avec lequel une connexion de données doit être établie à l'aide du terminal de communication portable (3) ;
- (e) après les étapes (c) et (d), l'établissement de la connexion de données entre le terminal de communication portable (3) et le réseau domestique (10) sélectionné à l'aide de l'identifiant de l'appareil électroménager (2) et
- (f) après l'étape (e), le transfert de la connexion de données depuis le terminal de communication portable (3) vers l'appareil électroménager (2) par transmission d'instructions de commande depuis le terminal de communication portable (3) vers l'appareil électroménager (2) via la liaison de communication (16), l'appareil électroménager (2) recevant, via les instructions de commande, l'instruction de se connecter au réseau domestique sans fil (10) à l'aide des données d'accès.

2. Procédé selon la revendication 1, **caractérisé en ce que** la liaison de communication (16) est établie à l'aide du standard de communication NFC ou du standard de communication Bluetooth ou d'un standard de communication pour la communication de données optique.

3. Procédé selon la revendication 1 ou 2, **caractérisé en ce que** l'appareil électroménager (2) est connecté à un réseau WLAN en tant que réseau domestique (10) et que les données d'accès comprennent le SSID d'un point d'accès (11) du réseau WLAN, et en particulier également une clé WPA.

4. Procédé selon l'une des revendications précédentes, **caractérisé en ce que** la réception des données d'accès par le terminal de communication portable (3) comprend :
- la saisie des données d'accès par un opérateur (17) via un dispositif de saisie (14) du terminal de communication portable (3) et/ou
- la réception, via le terminal de communication portable (3), d'un message (19), en particulier d'un SMS et/ou d'un e-mail, contenant les données d'accès et/ou
- la transmission des données d'accès depuis un point d'accès (11) du réseau domestique sans fil (10) vers le terminal de communication portable (3).

5. Procédé selon l'une des revendications précédentes, **caractérisé en ce que** la connexion réussie de l'appareil électroménager (2) au réseau domestique sans fil (10) est détectée par le terminal de communication portable (3) et signalisée au moyen d'un dispositif de sortie (14) du terminal de communication portable (3).

6. Produit de programme informatique comportant un support de stockage sur lequel est stocké un programme informatique adapté pour mettre en oeuvre un procédé selon l'une des revendications précédentes lorsqu'il est exécuté par un terminal de communication portable (3).

7. Terminal de communication portable (3) adapté pour mettre en oeuvre un procédé selon l'une des revendications 1 à 5.

8. Appareil électroménager (2) comportant :
- un premier dispositif de communication (8) pour connecter l'appareil électroménager (2) à un réseau domestique sans fil (10) et
- un second dispositif de communication (9) pour établir une liaison de communication sans fil (16) distincte du réseau domestique (10) vers un terminal de communication portable (3) selon un standard de communication de courte distance prédéterminé, l'appareil électroménager (2) étant conçu pour transmettre au terminal de communication portable (3), via la liaison de communication (16), un identifiant de l'appareil électroménager (2) pour le réseau domestique sans fil (10), et
- un dispositif de commande (7) adapté pour recevoir, via la liaison de communication (16) du second dispositif de communication (9), des instructions de commande provenant du terminal de communication portable (3) et, sur la base des instructions de commande, donner pour instruction au premier dispositif de communication (8) de se connecter à un réseau domestique sans fil (10) sélectionné à l'aide des données d'accès du réseau domestique (10) sélectionné contenues dans les instructions de commande, pour recevoir du terminal de communication portable (3) une connexion de données au réseau domestique (10) sélectionné à l'aide du terminal de communication portable (3), établie à l'aide de l'identifiant de l'appareil électroménager (2).
